# EUROPÄISCHE PATENTSCHRIFT

(11) **EP 4 034 434 B1**
(45) Veröffentlichungstag und Bekanntmachung des Hinweises auf die Patenterteilung: **06.08.2025**
(21) Anmeldenummer: 20771830.5
(22) Anmeldetag: 11.09.2020
(51) Int. Cl.: B60S 3/06

(54) **VERFAHREN UND VORRICHTUNG ZUM BEHANDELN EINES FAHRZEUGS MIT MINDESTENS EINER AUSSENFLÄCHE**
METHOD AND DEVICE FOR TREATING A VEHICLE WITH AT LEAST ONE OUTER SURFACE
PROCÉDÉ ET DISPOSITIF POUR TRAITER UN VÉHICULE AYANT AU MOINS UNE SURFACE EXTÉRIEURE

(30) Priorität: 25.09.2019 DE 102019125785
(43) Veröffentlichungstag der Anmeldung: 03.08.2022
(73) Patentinhaber: WashTec Holding GmbH, 86153 Augsburg (DE)
(72) Erfinder: FOERG, Oliver, 86199 Augsburg (DE); HEINZ, Bernhard, 86368 Gersthofen (DE); STECHER, David, 86653 Monheim (DE)
(74) Vertreter: Schwarz, Claudia
(86) Internationale Anmeldenummer: PCT/EP2020/075463
(87) Internationale Veröffentlichungsnummer: WO 2021/058304

(56) Entgegenhaltungen:
- DE-A1- 102017 116 174

## Beschreibung

Die vorliegende Erfindung betrifft ein Verfahren und eine Vorrichtung zum Behandeln eines Fahrzeugs mit mindestens einer Außenfläche, eine Verwendung der Vorrichtung zum Behandeln eines Fahrzeugs mit mindestens einer Außenfläche, und ein Computerprogrammprodukt.

In Fahrzeugwaschanlagen, wie Portalwaschanlagen oder Waschstraßen, werden die Flächen des Fahrzeugs typischer Weise mit, z.B. rotierenden, Waschbürsten gereinigt, die auf vorgegebenen Bahnen an den Flächen entlanggeführt werden. Dabei werden hervorstehende Anbauteile am Fahrzeug durch globale Strategien berücksichtigt, um Kollisionen oder Beschädigungen des Fahrzeugs und/oder der Waschbürste zu vermeiden. Hier ist als ein Beispiel eine Umfahrung von Seitenspiegeln zu nennen, bei der im Vorlauf die Waschbürste in der senkrechten Stellung arretiert wird, im Rücklauf wird die Waschbürste an das Fahrzeug angelegt, wird aber ungefähr ab der Fahrzeugmitte wieder geradegestellt, um den Seitenspiegel vor Beschädigungen zu schützen. Dabei wird die Geradestellung der Waschbürste nur abhängig von der Fahrzeuglänge, z.B. ab der Mitte des Fahrzeugs, und einer fest eingestellten Zeit für eine Wegstellbewegung vom Fahrzeug realisiert. Dadurch werden die Bereiche hinter dem Seitenspiegel jedoch nicht immer optimal gereinigt. Globale Strategien werden typischer Weise für Fahrzeugkonturen verwendet, die sich auf jedes Fahrzeug verallgemeinern lassen.

Bei Vorhandensein von ungewöhnlichen Anbauteilen am Fahrzeug oder speziellen Konturen müssen typischer Weise Sonderabläufe des Fahrzeugwaschvorgangs initiiert werden, z.B. durch Auswahl eines speziellen Programms. Hier ist beispielsweise das Pickup- oder das Dachboxprogramm zu nennen. Dachboxen können im Bereich der Frontscheibe unterfahren und durch die Hubbewegung der Dachbürste aus der Verankerung gerissen werden. Diese Geometrie ist bei einer starr gelagerten Dachbürste und einem festen Programm nicht ohne Sonderablauf behandelbar.

Weiter ist der typische Fahrzeugwaschvorgang unflexibel bezüglich sich verändernder Fahrzeugkonturen oder Positionen, wie z.B., wenn das Fahrzeug wegrollt, eine Heckklappe oder eine Seitentür sich öffnet. Ebenso können durch Störungen im Waschprozess Schwingungen im mechanischen System der Maschine entstehen, die einen normalen Waschablauf unmöglich machen.

Dokument DE 10 2017 116 174.0 zeigt eine Vorrichtung sowie ein Verfahren zum Reinigen eines Fahrzeugs, wobei die Neigung der Seitenbürste auf einen festen Wert entsprechend der Neigung einer Außenfläche angepasst ist.

Aufgabe ist es, eine Vorrichtung und ein Verfahren zum Behandeln eines Fahrzeugs bereitzustellen, die ein gründliches Behandlungsergebnis sowie eine hohe Betriebssicherheit und eine Vermeidung von Fahrzeugschäden ermöglichen.

Diese Aufgabe wird gelöst durch ein Verfahren nach Anspruch 1 und eine Vorrichtung nach Anspruch 7, sowie eine Verwendung nach Anspruch 14 und ein Computerprogrammprodukt nach Anspruch 15.

Eine erste Ausführungsform der Erfindung betrifft ein Verfahren zum Behandeln, insbesondere Reinigen, eines Fahrzeugs mit mindestens einer Außenfläche mit den Merkmalen des Patentanspruchs 1.

Das Verfahren der vorstehenden Ausführungsform ermöglicht mittels einer Überwachung des Winkels der Behandlungsbürste während des Behandlungsvorgangs, dass unvorhergesehene und/oder unerwünschte Situationen oder Fahrzeugkonturen automatisch erkannt und diesen mit entsprechenden Sonderabläufen automatisch entgegengewirkt werden kann. Somit erlaubt das Verfahren eine Führung der Behandlungsbürste auf einer Bahn, die an die gesamte äußere Kontur des Fahrzeugs angepasst ist. Dadurch resultiert eine besonders gründliche Behandlung des Fahrzeugs. Gleichzeitig kann mit dem Verfahren während der Behandlung eine sichere Annäherung der Bürste an das Fahrzeug eingehalten werden. Zudem kann mit der Vorrichtung einer unerwünschten Schwingung der Bürste entgegengewirkt werden, indem bereits kleine Abweichungen des Winkels der Behandlungsbürste vom vorbestimmten Winkelbereich erfasst werden und die Bahn der Behandlungsbürste adaptiert wird. Daher wird die Betriebssicherheit beim Fahrzeugbehandlungsvorgang erhöht und Fahrzeugschäden werden vermieden.

Insbesondere ist die Überwachung des Behandlungsvorgangs anhand des Winkels der Behandlungsbürste zur Vertikalen wesentlich empfindlicher als bisherige Überwachungsmaßnahmen, insbesondere empfindlicher im Vergleich zur Überwachung anhand der Leistungsaufnahme des Bürstenantriebes oder der Rotation der Bürste. Zudem ermöglicht die Überwachung des Behandlungsvorgangs anhand des Winkels der Behandlungsbürste zur Vertikalen ein wesentlich schnelleres Adaptieren der Bahn der Behandlungsbürste, als mit einer Überwachung anhand der Leistungsaufnahme des Bürstenantriebes- oder der Rotation der Bürste. Letztere Überwachungsmaßnahmen zeigen nämlich eine relativ große Totzeit, d.h. einen langen Zeitraum, in dem eine bereits vorhandene Störung oder Abweichung vom erwünschten Behandlungsvorgang nicht erkannt wird. Mit der Überwachung des Behandlungsvorgangs anhand des Winkels der Behandlungsbürste zur Vertikalen hingegen wird eine ungewöhnliche Auslenkung der Bürste bereits erkannt, bevor die Bürste durch beispielsweise Verhaken am Fahrzeug blockiert wird oder wegen einer ungewöhnlichen Fahrzeugkontur oder Lageverschiebung des Fahrzeugs mit diesem kollidiert oder dieses beschädigt. Dies beruht auf der Tatsache, dass das Material der Behandlungsbürste mit dem Fahrzeug bei einer Annäherung zuerst oder während des Behandlungsvorgangs kontinuierlich in Kontakt steht, so dass sich außergewöhnliche Situationen sehr schnell auf die Orientierung der Bürste zur Vertikalen auswirken.

In der Erfindung wird der Winkel der Behandlungsbürste im Schritt a) unter Bereitstellung einer Schwenkbarkeit der Behandlungsbürste eingestellt.

Beispielsweise kann eine Schwenkbarkeit, auch restliche freie Schwenkbarkeit genannt, von mindestens +/-5°, bevorzugt mindestens +/-1°, mehr bevorzugt mindestens +/-0,5°, bereitgestellt werden. Im Falle einer im Wesentlichen starr aufgehängten Behandlungsbürste kann die restliche freie Schwenkbarkeit mindestens +/-1° betragen. Im Falle einer im Wesentlichen frei schwingend oder frei pendelnd aufgehängten Behandlungsbürste kann eine restliche freie Schwenkbarkeit von mindestens +/-5 bereitgestellt werden. Die Reihenfolge der Schritte a) bis c), wobei c) mit d) verknüpft ist, kann in Ausführungsformen variiert werden. Die Behandlungsbürste kann ferner zumindest während oder im Verlauf des Behandlungsvorgangs rotieren. Wenn im Schritt c) eine Abweichung ermittelt wird, können zudem die Daten der Position der Abweichung an der Außenfläche ermittelt werden.

Das Adaptieren der Bahn kann mindestens einen Schritt umfassen, ausgewählt aus i) Wiederholen mindestens einen der Schritte a) bis d); ii) Wiederholen mindestens einen der Schritte a) bis d) mit einem modifizierten Abstand der Behandlungsbürste zur Außenfläche; iii) Wiederholen mindestens einen der Schritte a) bis d) mit einem modifizierten Winkel der Behandlungsbürste zur Vertikalen parallel und/ oder senkrecht zur Außenfläche; iv) Wiederholen mindestens Schritt b) von der Schritten a) bis d), wobei in Schritt b) beim Entlangführen ein Richtungswechsel vorgenommen wird; v) Umfahren einer die Abweichung des überwachten Winkels verursachenden Kontur der Außenfläche; vi) Vergrößern des Abstands der Behandlungsbürste zur Außenfläche; vii) Separieren der Behandlungsbürste vom Fahrzeug; viii) Beenden einer Rotation der Behandlungsbürste; ix) Behandeln einer die Abweichung des überwachten Winkels verursachenden Kontur der Außenfläche mit mindestens einer anderen Behandlungsbürste; x) Verändern der Rotationsrichtung der Behandlungsbürste; xi) Variieren der Empfindlichkeit der Leistungsmessung, insbesondere Erhöhen der Empfindlichkeit der Leistungsmessung; und xii) Prüfen der Durchführbarkeit mindestens eines der Schritte i) bis xi) und Unterbrechen oder Beenden des Behandlungsvorgangs, wenn festgestellt wird, dass der mindestens eine Schritt i) bis xi) nicht durchführbar ist.

Im Schritt iv) kann der Richtungswechsel am Anfang, am Ende oder während des Entlangführens der Behandlungsbürste an der Außenfläche vorgenommen werden. In den Schritten i) bis v) können insbesondere oder nur die Schritte b) bis d) wiederholt werden. Die Schritte i) bis x) sind jeweils Maßnahmen, mit denen einer Störung oder Abweichung vom erwünschten Behandlungsvorgang durch Führung der Bürste auf einer entsprechend adaptierten Bahn hochflexibel und zeitnah entgegengewirkt werden kann.

In Ausführungsformen des Verfahrens kann die Behandlungsbürste auf einer oder mehreren adaptierten Bahnen solange an der mindestens einen Außenfläche entlanggeführt werden, bis mindestens eine der folgenden Bedingungen erfüllt ist: der überwachte Winkel der Behandlungsbürste befindet sich im mindestens einen vorbestimmten Winkelbereich; die Bahn der Behandlungsbürste wurde eine vorbestimmte Anzahl von Malen adaptiert; und die Behandlungsbürste wurde auf einer oder mehreren adaptierten Bahnen eine vorbestimmte Zeit lang an der Außenfläche entlanggeführt. Damit kann erreicht werden, dass das Adaptieren der Bahn nur solange wie nötig durchgeführt wird, d.h. solange die Störung oder Abweichung vom gewünschten Winkel der Behandlungsbürste zur Vertikalen.

Die mindestens eine Außenfläche kann ausgewählt sein aus einer Seitenfläche, einer Heckfläche, einer Fronfläche, einer Dachfläche, einer beliebigen Kombination davon und einer beliebigen Anzahl davon, und der mindestens eine vorbestimmte Winkelbereich kann von einem oberen Grenzwert und/oder einem unteren Grenzwert begrenzt sein, der/die abhängig von der Art der Außenfläche variiert/variieren.

Ferner ist die mindestens eine Außenfläche erfindungsgemäß ausgewählt aus einer Seitenfläche, einer Heckfläche, einer Fronfläche, einer beliebigen Kombination davon und einer beliebigen Anzahl davon, und der mindestens eine vorbestimmte Winkelbereich kann von einem oberen Grenzwert und/oder einem unteren Grenzwert begrenzt sein, der/die abhängig von der Höhe der Außenfläche variiert/variieren.

Diese spezifischen Grenzwerte ermöglichen, dass die Empfindlichkeit der Überwachung des Schritts c) eingestellt und variiert werden kann, z.B. in Abhängigkeit von der Art und/oder der Höhe der Außenfläche oder vom Fahrzeugtyp.

Des Weiteren kann die mindestens eine Außenfläche ausgewählt sein aus einer Seitenfläche, einer Heckfläche, einer Fronfläche, einer beliebigen Kombination davon und einer beliebigen Anzahl davon, und der mindestens eine vorbestimmte Winkelbereich kann -45° bis +45° zur Vertikalen betragen. Insbesondere für eine Neigung der Behandlungsbürste in Richtung zur Außenfläche kann der mindestens eine vorbestimmte Winkelbereich bevorzugt -10° bis +30° zur Vertikalen, mehr bevorzugt -5° bis +30° zur Vertikalen, betragen. Ferner kann die mindestens eine Außenfläche eine Dachfläche sein und der mindestens eine vorbestimmte Winkelbereich kann -85° bis +85°, bevorzugt -80° bis +80, zur Vertikalen betragen.

In weiteren Ausführungsformen kann Schritt c) unter Verwendung eines Winkelsensors oder eines Neigungssensors ausgeführt werden. Dies hat den Vorteil, dass die Orientierung der Behandlungsbürste zur Vertikalen während des Behandlungsvorgangs intermittierend oder kontinuierlich überwacht werden kann. Als Neigungssensor kann in Ausführungsformen ein kombinierter Beschleunigungs-Drehraten-Sensor oder eine Kombination von Gyroskop und Beschleunigungssensor eingesetzt werden. Diese arbeiten vorteilhafter Weise unbeeinflusst von Erschütterungen.

Der Winkelsensor kann einen Magneten und einen Magnetfeldsensor umfassen. Dies birgt die Vorteile, dass die Funktion des Winkelsensors nicht Temperatur- und Feuchtigkeits-abhängig, gegenüber Erschütterungen unempfindlich, und auch nicht durch Wasserdruck beeinflussbar ist. Gleiches gilt bei Verwendung eines Neigungssensors. Der Winkelsensor kann zumindest teilweise auf einer dem Winkel der Behandlungsbürste zur Vertikalen entsprechenden Achse angeordnet sein, z.B. auf einer den Neigungswinkel der Bürste vorgebenden Neigungsachse. Damit lässt sich die Orientierung der Behandlungsbürste zur Vertikalen genau ermitteln. Insbesondere kann die Achse oder Neigungsachse einer Schwenkachse der Bürste entsprechen, mittels derer der Winkel der Behandlungsbürste eingestellt wird. Ferner kann der Magnet entfernt vom Magnetfeldsensor auf der Neigungsachse der Bürste angeordnet sein. Die Ermittlung des Winkels der Reinigungsbürste kann so kontinuierlich mit besonders hoher Genauigkeit erfolgen. Außerdem kann im Schritt c) eine Veränderung der Ausrichtung des Magnetfelds eines Magneten ermittelt werden. Der Winkelsensor kann alternativ als Laserwinkelsensor ausgebildet sein, bei dem ein Laserstrahl an einer reflektierenden Oberfläche ausgelenkt wird, die entsprechend der Orientierung der Bürste ausgerichtet wird.

Gemäß anderer Ausführungsformen kann im Verfahren die Kontur und/oder Position der Außenfläche ermittelt werden. Hierfür können z.B. Lichtschranken eingesetzt werden. Ferner kann die Behandlungsbürste rotieren, insbesondere in Schritt b). Schritt c) kann mindestens einen Schritt umfassen ausgewählt aus: Überwachen der Leistungsaufnahme der rotierenden Behandlungsbürste und Überwachen der Rotation der rotierenden Behandlungsbürste.

Eine weitere Ausführungsform der Erfindung betrifft eine Vorrichtung zum Behandeln, insbesondere Reinigen, eines Fahrzeugs mit mindestens einer Außenfläche mit einem Verfahren nach einer der vorstehenden Ausführungsformen, mit den Merkmalen des Patentanspruchs 7.

Die Behandlungsbürste kann rotierbar gelagert sein und die Vorrichtung kann einen Bürstenrotationsantrieb umfassen. Die Einrichtung zum Adaptieren der Bahn der Behandlungsbürste kann eine datenverarbeitende Speicher- und Steuereinheit sein oder umfassen, die datenleitend mit mindestens einer Einrichtung ausgewählt aus der Bürstenverfahrvorrichtung, dem Bürstenrotationsantrieb, der Einrichtung zum Einstellen eines Winkels der Behandlungsbürste und der Einrichtung zum Überwachen des Winkels der Behandlungsbürste verbunden ist, die zum Speichern von diesen Einrichtungen empfangener Daten ausgebildet ist und die zum Steuern des Verfahrens nach einer der vorstehenden Ausführungsformen ausgebildet ist. Die Bürstenverfahrvorrichtung kann ausgebildet sein, die Daten der Position an der Außenfläche zu ermitteln und/oder an die Speicher- und Steuereinheit zu leiten, an der der überwachte Winkel der Behandlungsbürste von dem mindestens einen vorbestimmten Winkelbereich abweicht.

Mindestens ein Element ausgewählt aus der Behandlungsbürste, der Bürstenverfahrvorrichtung und dem Bürstenrotationsantrieb kann mittels der Einrichtung zum Adaptieren der Bahn der Behandlungsbürste, insbesondere mit der Speicher- und Steuereinheit, regelbar sein. Ferner kann in der Einrichtung zum Adaptieren der Bahn der Behandlungsbürste, insbesondere in der Speicher- und Steuereinheit, ein Programm, insbesondere ein Computerprogramm implementiert sein, das dazu ausgelegt ist, die Vorrichtung dazu zu veranlassen, ein Verfahren nach einer der vorstehenden Ausführungsformen auszuführen.

Die mindestens eine Außenfläche kann ausgewählt sein aus einer Seitenfläche, einer Heckfläche, einer Fronfläche, einer Dachfläche, einer beliebigen Kombination davon und einer beliebigen Anzahl davon, und der mindestens eine vorbestimmte Winkelbereich kann von einem oberen Grenzwert und/oder einem unteren Grenzwert begrenzt sein, der/die abhängig von der Art der Außenfläche variiert/variieren.

Erfindungsgemäß ist die mindestens eine Außenfläche ausgewählt aus einer Seitenfläche, einer Heckfläche, einer Fronfläche, einer beliebigen Kombination davon und einer beliebigen Anzahl davon, und der mindestens eine vorbestimmte Winkelbereich kann von einem oberen Grenzwert und/oder einem unteren Grenzwert begrenzt sein, der/die abhängig von der Höhe der Außenfläche variiert/variieren.

In den vorgenannten Ausführungsformen kann die mindestens eine Außenfläche ausgewählt sein aus einer Seitenfläche, einer Heckfläche, einer Fronfläche, einer beliebigen Kombination davon und einer beliebigen Anzahl davon, und der mindestens eine vorbestimmte Winkelbereich kann -45° bis +45° zur Vertikalen betragen.

Insbesondere für eine Neigung der Behandlungsbürste in Richtung zur Außenfläche kann der mindestens eine vorbestimmte Winkelbereich bevorzugt -10° bis +30° zur Vertikalen, mehr bevorzugt -5° bis +30° zur Vertikalen, betragen. Ferner kann die mindestens eine Außenfläche eine Dachfläche sein und der mindestens eine vorbestimmte Winkelbereich kann -85° bis +85°, bevorzugt -80° bis +80, zur Vertikalen betragen.

Die Einrichtung zum Überwachen des Winkels der Behandlungsbürste kann einen Winkelsensor oder einen Neigungssensor aufweisen. Als Neigungssensor kann in Ausführungsformen ein kombinierter Beschleunigungs-Drehraten-Sensor oder eine Kombination von Gyroskop und Beschleunigungssensor eingesetzt werden. Diese arbeiten vorteilhafter Weise unbeeinflusst von Erschütterungen.

Der Winkelsensor kann einen Magneten und einen Magnetfeldsensor umfassen. Dabei kann der Winkelsensor zumindest teilweise auf einer dem Winkel der Behandlungsbürste zur Vertikalen entsprechenden Achse angeordnet sein, z.B. auf einer den Neigungswinkel der Bürste vorgebenden Neigungsachse. Insbesondere kann die Achse oder Neigungsachse einer Schwenkachse der Bürste entsprechen, mittels derer der Winkel der Behandlungsbürste eingestellt wird. Ferner kann der Magnet entfernt vom Magnetfeldsensor auf der Neigungsachse der Bürste angeordnet sein. Der Winkelsensor kann ferner dazu ausgebildet sein, eine Veränderung der Ausrichtung des Magnetfelds eines Magneten zu ermitteln.

Die Vorrichtung kann weiter umfassend mindestens ein Element ausgewählt aus: einer Einrichtung zum Überwachen der Leistungsaufnahme der rotierenden Behandlungsbürste; einer Einrichtung zum Überwachen der Rotation der rotierenden Behandlungsbürste; und einer Einrichtung zum Ermitteln der Kontur und/oder Position der Außenfläche.

Die vorgenannten Ausführungsformen der Vorrichtung können entsprechende Modifikationen umfassen wie die oben erläuterten Ausführungsformen des Verfahrens zum Behandeln eines Fahrzeugs und die gleichen vorteilhaften Wirkungen ermöglichen wie die oben erläuterten Ausführungsformen des Verfahrens mit entsprechenden oder analogen Merkmalen.

Eine weitere Ausführungsform der Erfindung betrifft eine Verwendung einer Vorrichtung nach einer der vorstehenden Ausführungsformen zum Ausführen eines Verfahrens nach einer der vorstehenden Ausführungsformen.

Eine zusätzliche Ausführungsform der Erfindung gibt ein Computerprogrammprodukt oder Computerprogramm an, umfassend Programmelemente, die eine Ausführungseinheit, insbesondere eine Fahrzeugbehandlungsanlage oder eine Vorrichtung nach einer der vorstehenden Ausführungsformen, dazu veranlassen, das Verfahren nach einer der vorstehenden Ausführungsformen auszuführen, wenn die Programmelemente in einen Speicher der Ausführungseinheit, insbesondere in die Speicher- und Steuereinheit der Vorrichtung nach einer der vorstehenden Ausführungsformen, oder in einen Speicher eines mit der Ausführungseinheit in datenleitender Verbindung stehenden Servers oder Computers geladen werden. Ausführungsformen stellen ein entsprechendes Computerprogramm und/oder ein computerlesbares Medium bereit, auf dem das Computerprogramm gespeichert ist. Der Server und/oder der Computer können mit der Fahrzeugbehandlungsanlage drahtgebunden oder drahtlos verbunden und/oder darin integriert sein.

In den vorgenannten Ausführungsformen der Fahrzeugbehandlungsanlage und/oder des Computerprogrammprodukts und/oder des Computerprogramms können entsprechende Modifikationen implementiert sein wie in den oben erläuterten Ausführungsformen des Verfahrens zum Betreiben einer Fahrzeugbehandlungsanlage und diese können die gleichen vorteilhaften Wirkungen ermöglichen wie die oben erläuterten Ausführungsformen des Verfahrens mit entsprechenden Merkmalen.

In der folgenden detaillierten Figurenbeschreibung werden weitere, nicht einschränkend zu verstehende Ausführungsbeispiele mit deren Merkmalen und weiteren Vorteilen anhand der Figuren erläutert. Alle hier beschriebenen und sich nicht gegenseitig ausschließenden Merkmale oder Verfahrensschritte von Ausführungsformen und Beispielen können miteinander kombiniert werden. Gleiche Elemente der Ausführungsformen sind in der folgenden Beschreibung mit den gleichen Bezugszeichen versehen. Elemente einer Ausführungsform können in den anderen Ausführungsformen genutzt werden ohne weitere Erwähnung.

### Kurze Beschreibung der Figuren

- Fig. 1: zeigt schematisch als eine Ausführungsform gemäß der Erfindung eine Vorrichtung 10 nach dem Einfahren des Fahrzeugs;
- Fig. 2a bis 2c: zeigen schematisch die Vorrichtung 10 während der Schritte a) bis d) einer Ausführungsform des Verfahrens;
- Fig. 3a bis 3c: zeigen schematisch als eine Ausführungsform gemäß der Erfindung eine Vorrichtung 11 während der Schritte a) bis d) einer anderen Ausführungsform des Verfahrens; und
- Fig. 3d: zeigt schematisch die Vorrichtung 11 während eines alternativen Schritts d) der anderen Ausführungsform des Verfahrens.

### Detaillierte Beschreibung der Erfindung

Der Begriff "Adaptieren" umfasst ein Modifizieren der Bahn der Behandlungsbürste, z.B. ein Modifizieren einer durch eine räumliche Vorgabe und optional eine zeitliche Vorgabe vorbestimmten Bahn. Die Bahn der Erfindung wird durch ein vor Beginn des Behandlungsvorganges festgelegten Behandlungsprogramm vorgegeben, z.B. nach Eingabe oder Ermittlung des Fahrzeugtyps und/oder nach einer anfänglichen Konturerfassung des Fahrzeugs. Zum Beispiel kann die Bahn in Draufsicht auf die Dachfläche gesehen im Wesentlichen parallel zu der zu behandelnden Seiten- und/oder Heckfläche verlaufen. Der Begriff "Adaptieren" kann ein Steuern und/oder Regeln umfassen, bei dem die Bahn der Behandlungsbürste modifiziert wird. Dabei kann mindestens ein Element ausgewählt aus der Behandlungsbürste, der Bürstenverfahrvorrichtung und dem Bürstenrotationsantrieb geregelt werden oder regelbar sein, insbesondere mittels der Einrichtung zum Adaptieren der Bahn der Behandlungsbürste.

"Winkel der Behandlungsbürste parallel und/oder senkrecht zur Außenfläche" oder "Winkel der Behandlungsbürste in einem Winkelbereich parallel und/oder senkrecht zur Außenfläche" bedeutet vorliegend, dass die Behandlungsbürste zumindest teilweise in einem Winkel orientiert sein/werden kann, der in einer Ebene im Wesentlichen parallel zur Außenfläche oder in einer Ebene liegt, die mit der Außenfläche einen Winkel von mehr als 0° bis weniger als 180° einschließt.

Der Begriff "Umfahren" umfasst ein Weiterführen der Behandlungsbürste auf einer derartig adaptierten Bahn, dass die Behandlungsbürste in einem vergrößerten Abstand in Kontakt mit der Außenfläche und/oder mit der die Abweichung des überwachten Winkels verursachenden Kontur der Außenfläche steht. Der Begriff "Umfahren" beinhaltet ferner ein Weiterführen der Behandlungsbürste auf einer derartig adaptierten Bahn, dass die Behandlungsbürste nicht in Kontakt zur Außenfläche und/oder einer die Abweichung des überwachten Winkels verursachenden Kontur der Außenfläche steht.

Der Begriff "Leistungsaufnahme der (rotierenden) Behandlungsbürste" ist als synonym mit "Leistungsaufnahme des Bürstenantriebes" oder "Leistungsaufnahme des Bürstenrotationsantriebs" zu verstehen. Analoges gilt für den Begriff "Leistungsabfall".

Im Folgenden wird die Behandlungsbürste beschrieben als Reinigungsbürste, die Behandlung des Fahrzeugs ist aber nicht auf eine Reinigung beschränkt. Der Winkel der Bürste wird vorliegend auch Neigungswinkel genannt. Der Begriff "Neigungssensor" bezeichnet vorliegend ein feinmechanisches oder elektrisches Messgerät, das für die Behandlungsbürste den genauen Bezug zur Lotrichtung herstellt oder Änderungen des Neigungswinkels überwacht. Der Begriff "Art" der Außenfläche bezieht sich darauf, dass die Außenfläche eine Seitenfläche, eine Heckfläche, eine Fronfläche oder eine Dachfläche des Fahrzeugs sein kann.

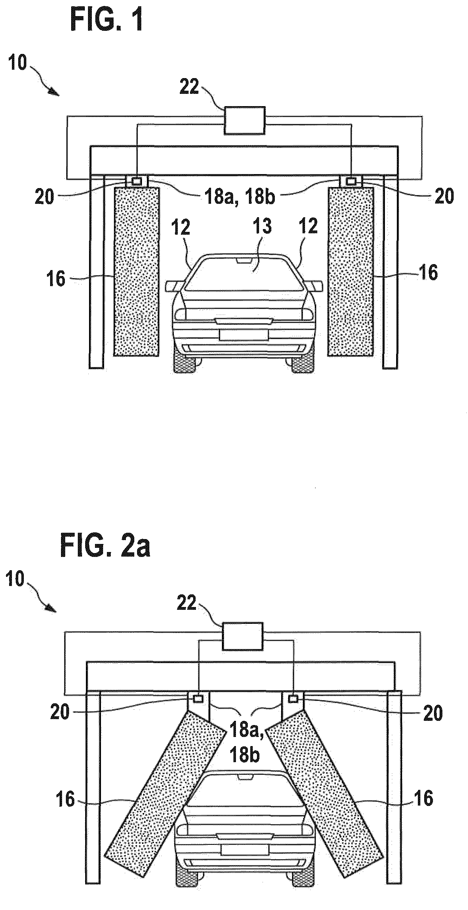

Fig. 1 zeigt als eine erfindungsgemäße Ausführungsform eine Vorrichtung 10 zum Reinigen eines Fahrzeugs nach dem Einfahren des Fahrzeugs, am Beispiel einer Portalwaschanlage.

Das Fahrzeug besitzt mindestens eine Außenfläche 12, 13, wobei in Fig. 1 zwei Seitenflächen 12 sowie eine Heckfläche 13 gezeigt sind, die jeweils um einen Neigungswinkel zur Vertikalen geneigt sind.

In der Vorrichtung 10 ist ein Rahmen mit einer Traverse vorgesehen, an der als Behandlungsbürsten zwei Seitenbürsten 16 jeweils an einer Aufhängung einer Bürstenverfahrvorrichtung 18a und jeweils um eine zentrale, längs verlaufende Drehachse der Bürste rotierbar angeordnet sind. Der Bürstenkörper bzw. die Borsten der Seitenbürsten können beispielsweise aus Polyethylen(PE)-Schaumstoff, PE-Filamenten oder Polypropylen(PP)-Filz bestehen. Wie aus Fig. 1 ersichtlich ist, sind die Seitenbürsten am oberen Ende ihrer jeweiligen Drehachse an der jeweiligen Aufhängung angebracht. Vor Inbetriebnahme der Vorrichtung sind die Seitenbürsten 16 sowie ihre Drehachsen wie in Fig. 1 gezeigt vertikal ausgerichtet. Die Seitenbürsten 16 können jeweils mittels der Traverse im Wesentlichen parallel zu den und entlang der Seitenflächen 12 und mit einem an der Traverse vorhandenen Schlitten im Wesentlichen parallel zur und entlang der Heckfläche 13 verfahren werden.

Die Aufhängungen der Bürstenverfahrvorrichtung 18a umfassen jeweils (nicht gezeigt) eine Bürstenhalterung und einen Bürstenrotationsantrieb, mit denen die betreffende Seitenbürste um ihre zentrale Drehachse in Rotation versetzt werden kann. Die Aufhängungen sind jeweils mit zwei Stellantrieben (nicht gezeigt), z.B. Linearantrieben mit Pneumatik- oder Hydraulikzylindern, versehen. Die Stellantriebe können die zentrale Drehachse der jeweiligen Seitenbürste um eine Schwenkachse (nicht gezeigt) im Wesentlichen parallel zur Seitenfläche des Fahrzeugs und um eine Schwenkachse (nicht gezeigt) im Wesentlichen parallel zur Heckfläche des Fahrzeugs verschwenken, jeweils unter Bereitstellung einer restlichen freien Schwenkbarkeit der Reinigungsbürste von mindestens +/-1°. Weitere beispielhafte Details der Aufhängung können der DE102104112388 A1 entnommen werden.

Die Vorrichtung 10 enthält ferner eine Einrichtung zum Ermitteln der Kontur der Außenflächen 12 und/oder 13. Diese kann ein Bilderfassungsgerät, eine/einen die Kontur des Fahrzeugs abfahrende(n) Dachbürste oder Seitenbürste oder Dachtrockner, Lichtschranken oder Lichtgitter, Radar- oder Ultraschallsensoren, ein Eingabegerät, eine Datenbank und/oder eine Fahrzeugtyp-Erkennung umfassen. Die Einrichtung zum Ermitteln der Kontur der Außenflächen dient zur Konturerfassung des Fahrzeugs, die mit der Vorrichtung des vorliegenden Beispiels zu Beginn oder auch im Verlauf des Verfahrens zum Reinigen des Fahrzeugs erfolgen kann. Beispielsweise können die 3D-Kontur oder die Höhenkontur des Fahrzeugs ermittelt werden.

Die Vorrichtung 10 besitzt zudem eine Einrichtung 18b zum Einstellen der Neigungswinkel der Seitenbürsten 16 zur Vertikalen in mindestens einem vorbestimmten Winkelbereich parallel und/oder senkrecht zu den Außenflächen 12 und 13. Die Einrichtung 18b wird im vorliegenden Beispiel mit der oben beschriebenen Aufhängung und den Stellantrieben, mit denen die Bürstendrehachse parallel zur Heckfläche 13 und/oder parallel zu den Seitenflächen 12 des Fahrzeugs verschwenkt werden kann, realisiert.

In der Vorrichtung 10 ist ferner eine Einrichtung 20 zum Überwachen der Neigungswinkel der Seitenbürsten zur Vertikalen vorgesehen. Im vorliegenden Beispiel ist die Einrichtung 20 als Winkelsensor ausgebildet, der den Neigungswinkel der jeweiligen Bürste bzw. ihrer Drehachse zur Vertikalen ermittelt. Pro Seitenbürste ist mindestens ein Winkelsensor vorgesehen.

Die Vorrichtung 10 enthält außerdem eine Einrichtung zum Adaptieren der Bahn der Seitenbürsten 16, wenn der überwachte Neigungswinkel von einem vorbestimmen Winkelbereich abweicht. Die Einrichtung zum Adaptieren der Bahn der Seitenbürsten umfasst vorliegend die Bürstenverfahrvorrichtung 18a, die Einrichtung 18b zum Einstellen der Neigungswinkel der Seitenbürsten 16 zur Vertikalen, und die Einrichtung 20 zum Überwachen der Neigungswinkel der Seitenbürsten zur Vertikalen. In anderen Beispielen ist die Einrichtung 18b zum Einstellen der Neigungswinkel der Behandlungsbürste(n) eine optionale Komponente der Einrichtung zum Adaptieren der Bahn der Behandlungsbürste(n). Im vorliegenden Beispiel umfasst die Einrichtung zum Adaptieren eine datenverarbeitende Speicher- und Steuereinheit 22, die datenleitend mit der Bürstenverfahrvorrichtung 18a, dem Bürstenrotationsantrieb, der Einrichtung 18b zum Einstellen des Winkels der Seitenbürsten und der Einrichtung 20 zum Überwachen des Winkels der Seitenbürsten verbunden ist, die zum Speichern von diesen Einrichtungen empfangener Daten ausgebildet ist und die zum Steuern des Reinigungsverfahrens ausgebildet ist. Hierfür ist/sind oder wird/werden in der Speicher- und Steuereinheit 22 ein Programm und/oder Steuerbefehle implementiert, das/die dazu ausgelegt ist/sind, ein Verfahren gemäß einer der Ausführungsformen auszuführen und/oder zu steuern. Das Programm kann durch ein Computerprogrammprodukt oder Computerprogramm implementiert sein/werden, dessen Programmelemente die Speicher- und Steuereinheit 22 und die Anlage 10 dazu veranlassen, das Reinigungsverfahren auszuführen, wenn die Programmelemente in die Speicher- und Steuereinheit 22 geladen sind/werden.

So wird durch die datenleitende und datenverarbeitende Vernetzung der Bürstenverfahrvorrichtung 18a, des Bürstenrotationsantriebs, der Einrichtung 18b zum Einstellen der Neigungswinkel der Seitenbürsten 16 zur Vertikalen, und der Einrichtung 20 zum Überwachen der Neigungswinkel der Seitenbürsten zur Vertikalen, eine Einrichtung zum Steuern oder Regeln realisiert, mittels der die Bahn der Behandlungsbürste adaptiert werden kann. Im vorliegenden Beispiel können die Bahnen der Seitenbürsten 16 adaptiert werden. Vor dem Adaptieren sind die Bahnen der Seitenbürsten durch eine räumliche Vorgabe vorbestimmt und verlaufen parallel zu den Seitenflächen 12 und/oder parallel zur Heckfläche 13.

Der vorbestimmte Winkelbereich beträgt im vorliegenden Beispiel - 45° bis +45° zur Vertikalen, wenn die Seitenbürste parallel zu der behandelten Außenfläche verschwenkt wird. Wird die Seitenbürste 16 zum Fahrzeug hin verschwenkt, beträgt in diesem Beispiel der vorbestimmte Winkelbereich -10° bis +30°, bevorzugt -5° bis 30°, in Richtung zur behandelten Außenfläche. Wie oben erläutert, sind die Seitenbürsten 16 im vorliegenden Beispiel im Wesentlichen parallel zur den Seitenflächen 12 des Fahrzeugs und im Wesentlichen parallel zur Heckfläche 13 des Fahrzeugs verschwenkbar. Daher können die Seitenbürsten 16 ausgehend von der Vertikalen jeweils zumindest teilweise in einem Winkel von -10° bis +30° zum Fahrzeug hin, d.h. zur behandelten Seitenfläche und/oder Heckfläche, orientiert werden. Dabei liegt der Winkel in einer Ebene, die im Wesentlichen parallel zu der betreffenden Seiten- oder Heckfläche orientiert ist oder mit der Seiten- oder Heckfläche einen Winkel von mehr als 0° bis weniger als 180° einschließt.

Im Betrieb wird mit der Vorrichtung 10 eine Ausführungsform des erfindungsgemäßen Verfahrens zum Behandeln eines Fahrzeugs mit mindestens einer Außenfläche durchgeführt.

In einem Beispiel umfasst das Verfahren die Schritte:
a) Einstellen der Winkel der Seitenbürsten 16 relativ zur Vertikalen in einem vorbestimmten Winkelbereich parallel und/oder senkrecht zur jeweiligen Seitenfläche 12;
b) Entlangführen der Seitenbürsten 16 an den Seitenflächen 12 jeweils auf einer Bahn während des Reinigungsvorgangs;
c) Überwachen der Winkel der Seitenbürsten 16 zur Vertikalen parallel und/oder senkrecht zur Außenfläche während Schritt b); und
d) Adaptieren der Bahn mindestens einer der Seitenbürsten, wenn im Schritt c) eine Abweichung des überwachten Winkels der mindestens einen Seitenbürste von dem vorbestimmten Winkelbereich ermittelt wird.

Das Verfahren des vorliegenden Beispiels wird nun anhand der Figuren 1 und 2a bis 2c beschrieben. Fig. 1 zeigt die Vorrichtung 10 mit den Seitenbürsten 16 nach dem Einfahren des Fahrzeugs. Fig. 2a bis 2c stellen die Vorrichtung 10 während der Schritte a) bis d) des Verfahrens dar.

Die Bahnen der Seitenbürsten 16 werden im vorliegenden Beispiel durch ein Behandlungsprogramm vorgegeben, das vor Beginn des Behandlungsvorgangs festgelegt wird. Zu diesem Zweck wird eine anfängliche Konturerfassung des Fahrzeugs durchgeführt. Hierfür kann eine Überfahrt der Traverse mit z.B. einer Kamera über das Fahrzeug auf dessen ganzer Länge durchgeführt werden. Alternativ oder zusätzlich können die Bahnen der Seitenbürsten 16 während des Behandlungsvorgangs mit Sensordaten von Lichtschranken und Wegsensoren berechnet und vorgegeben werden.

Die Seitenbürsten 16 der Vorrichtung 10 werden in Rotation um ihre Drehachse versetzt, was in Fig. 1 schematisch dargestellt ist. Anschließend werden im Schritt a) die Neigungswinkel der Seitenbürsten 16 in Richtung zu den Seitenflächen 12 auf ungefähr 20° relativ zur Vertikalen eingestellt. Die Neigungswinkel der Seitenbürsten liegen also jeweils in einer Ebene senkrecht zu den Seitenflächen. Im vorliegenden Beispiel entsprechen die Neigungswinkel der Seitenbürsten 16 im Wesentlichen den Neigungswinkeln der Seitenflächen 12, wie aus Fig. 2a ersichtlich ist. In Draufsicht (nicht gezeigt) auf die Seitenflächen 12, d.h. in den Ebenen parallel zu den Seitenflächen 12, d.h. im vorliegenden Beispiel in Fahrtrichtung des Fahrzeugs, werden die Seitenbürsten 16 nicht ausgelenkt. Dabei wird in beiden Ebenen eine restliche freie Schwenkbarkeit der Seitenbürsten in einem Winkelbereich von +/- 1° ermöglicht. In der Ebene senkrecht zu den Seitenflächen 12 beträgt der für den Neigungswinkel vorbestimmte Winkelbereich daher 19° bis 21°. In der Ebene parallel zu den Seitenflächen beträgt der für den Neigungswinkel vorbestimmte Winkelbereich +/- 1°.

Dann werden die Seitenbürsten 16 durch Verschieben der Aufhängungen der Bürstenverfahrvorrichtungen 18a entlang der Traverse an die Seitenflächen 12 des Fahrzeugs herangefahren und im Schritt b) durch Verschieben der Traverse auf den vorgegebenen Bahnen, die in Draufsicht auf die Dachfläche gesehen im Wesentlichen parallel zu den Seitenflächen 12 verlaufen, an den Seitenflächen entlanggeführt.

Während Schritt b), d.h. während des Führens der Seitenbürsten 16 entlang der Seitenflächen 12, werden die Neigungswinkel der Seitenbürsten mit der Einrichtung 20 zum Überwachen der Neigungswinkel der Seitenbürsten, im vorliegenden Beispiel mit dem Winkelsensor, kontinuierlich überwacht. Dies entspricht Schritt c) des Verfahrens.

Solange das Ende der Seitenflächen 12 nicht erreicht ist, werden die Schritte b) bis d) fortgesetzt, und es wird kontinuierlich ermittelt (Schritt c)), ob eine Abweichung der überwachten Neigungswinkel der Seitenbürsten von dem vorbestimmten Winkelbereich vorliegt. Dabei kann ein Toleranzbereich des Winkelsensors von ±3°, bevorzugt ±0,1° berücksichtigt werden. Falls die Neigungswinkel der Seitenbürsten im Wesentlichen im vorbestimmten Winkelbereich liegen, werden die Schritte b) bis c) solange fortgesetzt, bis das Ende der Seitenflächen 12 erreicht ist.

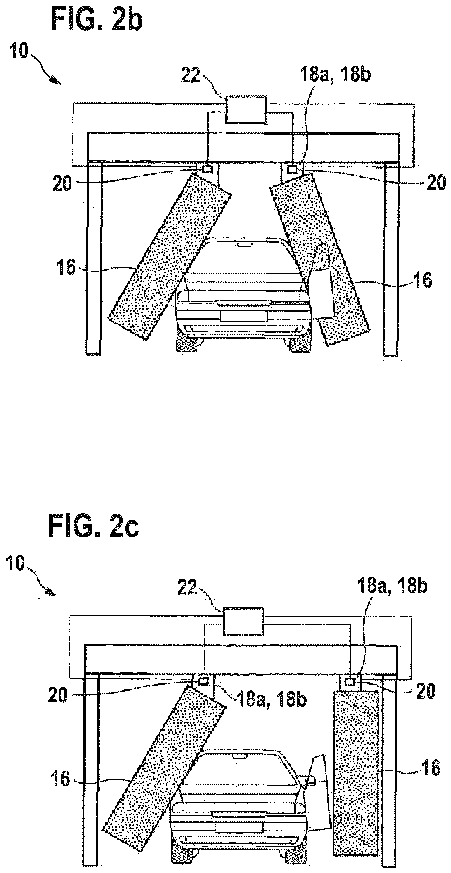

Falls der Neigungswinkel einer oder beider Seitenbürsten im Wesentlichen nicht im vorbestimmten Winkelbereich liegt, werden die Bahn bzw. die Bahnen der Seitenbürsten im Schritt d) adaptiert. Dies ist in Fig. 2b und 2c dargestellt. Im vorliegenden Beispiel öffnet sich nämlich überraschenderweise eine rechte Seitentür des Fahrzeugs, bevor die rechte Seitenbürste diese erreicht hat. Sobald die rechte Seitenbürste 16 die geöffnete Seitentür erreicht, wird die rechte Seitenbürste in der Ebene parallel zur Seitenfläche ausgelenkt. Dies wird von der Einrichtung 20 zum Überwachen der Neigungswinkel der Seitenbürste 16 im vorliegenden Beispiel innerhalb von ca. 100 ms detektiert und an die Speicher- und Steuereinrichtung 22 gemeldet. Die Bürstenverfahrvorrichtung 18a meldet gleichzeitig die Positionsdaten der unvorhergesehenen Fahrzeugkontur, also der geöffneten Seitentür.

Daraufhin veranlasst die Speicher- und Steuereinrichtung 22, dass die Bürstenverfahrvorrichtung 18a die rechte Seitenbürste 16 vom Fahrzeug wegfährt, sodass sie vom Fahrzeug separiert ist. So ist kein Kontakt mehr zwischen der Seitenbürste und dem Fahrzeug einschließlich der geöffneten Tür gegeben, wie in Fig. 2c dargestellt. Auf diese Weise wird die Bahn der rechten Seitenbürste adaptiert und es wird vermieden, dass die Seitenbürste die Seitentür des Fahrzeugs beschädigt. Im vorliegenden Beispiel wird die rechte Seitenbürste 16 durch die Einrichtung 18b zum Einstellen eines Winkels zusätzlich vertikal ausgerichtet. Der Zeitraum vom Beginn der Detektion der unerwünschten Auslenkung der rechten Seitenbürste bis zum Einleiten des Adaptierens beträgt im vorliegenden Beispiel ca. 0,3 s. Die Überwachung anhand des Neigungswinkels der Behandlungsbürste zeigt somit eine relativ geringe Totzeit, d.h. einen kurzen Zeitraum, in dem eine bereits vorhandene Störung oder Abweichung vom erwünschten Behandlungsvorgang nicht erkannt wird.

In einer Abwandlung des Beispiels kann zudem die Rotation der rechten Seitenbürste 16 beendet werden, so dass ein Eindringen von Reinigungsflüssigkeit durch die geöffnete Seitentür in den Fahrzeuginnenraum minimiert wird.

Der Reinigungsvorgang wird mit der linken Seitenbürste fortgesetzt, indem sie an der linken Seitenfläche 12 entlanggeführt wird. Die rechte Seitenbürste 16 wird auf einer adaptierten Bahn unter Einhaltung der Separierung vom Fahrzeug weitergeführt. Auf diese Weise wird ein Umfahren einer die Abweichung des überwachten Winkels verursachenden Kontur der Außenfläche, d.h. vorliegend die rechte Seitentür, realisiert. Sobald die Seitenbürsten 16 das Ende der Seitenflächen 12 erreicht haben, wird der Reinigungsvorgang beendet.

Alternativ oder zusätzlich kann vor, während oder nach dem Separieren der rechten Seitenbürste 16 vom Fahrzeug geprüft werden, ob der Reinigungsvorgang mit separierter rechter Seitenbürste fortgesetzt werden kann. Wenn festgestellt wird, dass dies nicht durchführbar ist, z.B. weil zu viel Reinigungsflüssigkeit durch die geöffnete Seitentür in den Fahrzeuginnenraum eindringen würde oder weil für das Weiterführen der rechten Seitenbürste auf der adaptierten Bahn nicht ausreichend Platz vorhanden ist, wird der Behandlungsvorgang unterbrochen oder beendet.

Wie oben erläutert, ist im vorliegenden Beispiel die Einrichtung 20 zum Überwachen des Winkels der Seitenbürsten als Winkelsensor ausgebildet. Der Winkelsensor umfasst dabei einen Magneten und einen Magnetfeldsensor. Da es sich um einen magnetischen Winkelsensor handelt, werden Störungen des Winkelsensors durch Erschütterungen, Temperaturschwankungen, Feuchtigkeit oder durch den Wasserdruck minimiert. Bei der Überwachung des Neigungswinkels der Bürste wird nämlich die Veränderung der Ausrichtung des Magnetfelds bestimmt. Im vorliegenden Beispiel ist der Magnet entfernt vom Magnetfeldsensor auf der Schwenkachse der jeweiligen Bürste angeordnet. Dabei ist der Magnet beabstandet vom Magnetfeldsensor auf der Schwenkachse angebracht, mit der der zu überwachende Neigungswinkel eingestellt wird, und der Magnetfeldsensor ist an der Aufhängung der Bürste, jedoch nicht auf der Schwenkachse, vorgesehen. So kann der Winkelsensor den Neigungswinkel der Bürste im Wesentlichen kontinuierlich und mit besonders hoher Genauigkeit überwachen. In Ausführungsformen mit mehreren Schwenkachsen pro Bürste kann für jede Schwenkachse der jeweiligen Bürste ein Winkelsensor vorgesehen sein. Es ist anzumerken, dass alle Ausführungsformen, bei denen ein Winkelsensor eingesetzt wird, eine besonders genaue Sensorik und Aktorik ermöglichen, weil es sich bei dem Winkelsensor vorteilhafterweise nicht um einen Punktsensor und auch nicht um einen Akzelerations-basiert betriebenen Sensor handelt. Gleiches gilt für Ausführungsformen und Beispiele, in denen in der Einrichtung 20 zum Überwachen des Winkels der Seitenbürsten ein Neigungssensor eingesetzt wird.

Auf analoge Weise wird das Verfahren ausgeführt, wenn die rechte oder linke Seitenbürste eine Seitenfläche reinigt und ihr Winkel parallel und/oder senkrecht zur gereinigten Fläche abweichend von einem vorbestimmten Winkelbereich durch eine geöffnete oder während des Reinigungsvorgangs aufgehende seitliche Schiebetür ausgelenkt wird. Hierbei, wie auch bei anderen unerwünschten Öffnungen der zu reinigenden Außenflächen, kann als zusätzliches Indiz für diese spezielle Fahrzeugkontur, die eine Störung des Reinigungsvorgangs bewirkt, eine überwachte Leistungsaufnahme der rotierenden Seitenbürste herangezogen werden. Zusätzlich zur Winkelabweichung wird nämlich ein plötzlicher Leistungsabfall der rotierenden Seitenbürste bzw. ihres Rotationsantriebs festgestellt, wenn die Seitenbürste wegen der durch die geöffnete Schiebetür vorhandenen Öffnung in der Seitenfläche nicht mehr oder in geringerem Ausmaß an dieser anliegt. Dann wird die Bahn der Seitenbürste adaptiert, z.B. durch Separieren der Seitenbürste vom Fahrzeug, Umfahren der Schiebetür, Beenden der Rotation und/oder Prüfen der Durchführbarkeit derselben wie oben beschrieben.

In einer Abwandlung des Beispiels der Vorrichtung 10 und des zugehörigen Verfahrens können nicht zwei, sondern nur eine Seitenbürste 16 mit entsprechender Bürstenverfahrvorrichtung 18a vorgesehen sein bzw. verwendet werden. In alternativen Beispielen des Verfahrens kann die Rotation der Seitenbürsten 16 auch während Schritt b) initiiert werden. Ferner kann das Heranfahren der Seitenbürsten 16 an die Seitenflächen 12 auch vor Schritt a) erfolgen.

Das vorliegende Beispiel der Vorrichtung 10 und des damit ausgeführten Verfahrens ist anhand einer Portalwaschanlage beschrieben. Die Erfindung ist jedoch nicht darauf beschränkt und kann analog abgewandelt beispielsweise auch mit einer Waschstraße realisiert werden. Zum Beispiel sind die Vorrichtung und das Verfahren gemäß Ausführungsformen auch mit einer Dachbürste realisierbar, die in einer Waschstraße auf einer zur Dachfläche des Fahrzeugs senkrechten Bahn - mit einer restlichen freien Schwenkbarkeit parallel und/oder senkrecht zur Dachfläche - unter Verstellung der Höhenposition der Dachbürste führbar ist und das in der Waschstraße transportierte Fahrzeug reinigt. Wenn die Dachbürste auf dem Dach des Fahrzeugs mit einer ungewöhnlichen Kontur, z.B. einem Fahrradhalter, in Kontakt kommt, wird ihr Winkel parallel und/oder senkrecht zur Dachfläche abweichend von einem vorbestimmten Winkelbereich ausgelenkt, beispielsweise +/- 85° zur Vertikalen, wenn die Dachbürste wie ein Pendel aufgehängt ist. Die Bahn der Dachbürste wird durch Veränderung ihrer Höhenposition gemäß Schritt d) des Verfahrens adaptiert und so eine Beschädigung des Fahrzeugdachs, der ungewöhnlichen Kontur und der Dachbürste vermieden. Auf analoge Weise wird das Verfahren ausgeführt, wenn die Dachbürste eine Heckfläche oder eine Frontfläche reinigt und ihr Winkel parallel und/oder senkrecht zur gereinigten Fläche abweichend von einem vorbestimmten Winkelbereich durch eine ungewöhnliche Fahrzeugkontur ausgelenkt wird, wie z.B. eine geöffnete oder während des Reinigungsvorgangs aufgehende Heckklappe oder Motorhaube.

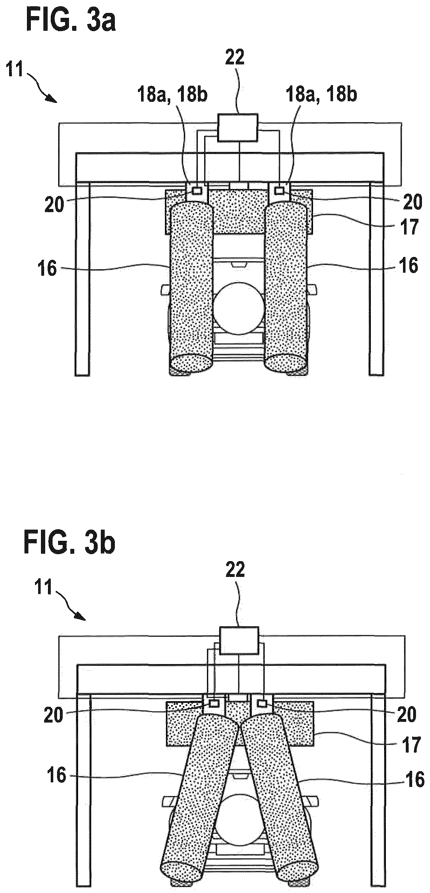

In einem weiteren Beispiel werden eine Vorrichtung 11 mit zwei Seitenbürsten 16 und einer Dachbürste 17 und ein zugehöriges Verfahren zum Reinigen der Heckfläche 13 eingesetzt. Die Vorrichtung 11 entspricht der Vorrichtung 10, wobei zusätzlich die Dachbürste 17 vorgesehen ist, wie Fig. 3a bis 3d zeigen. Es werden zunächst die Seitenbürsten 16 für die Reinigung der Heckfläche 13 verwendet und die Schritte a) bis d) des Verfahrens für die Heckfläche 13 ausgeführt. Hierfür werden die Neigungswinkel der Seitenbürsten 16 z.B. entsprechend einem Neigungswinkel der Heckfläche 13 eingestellt. Dies erfolgt mittels der Aufhängungen der Bürstenverfahrvorrichtung 18a, wobei mit den entsprechenden Stellantrieben die zentralen Drehachsen der Seitenbürsten 16 jeweils um die Schwenkachse im Wesentlichen parallel zu den Seitenflächen des Fahrzeugs verschwenkt werden, d.h. im vorliegenden Beispiel in Fahrtrichtung des Fahrzeugs. Dabei wird eine restliche freie Schwenkbarkeit der Seitenbürsten von +/-1° bereitgestellt. Die vorbestimmten Winkelbereiche entsprechen somit vorliegend senkrecht zur Heckfläche dem Neigungswinkel der Heckfläche +/-1° und parallel zur Heckfläche der Vertikalen +/-1°. Zum Reinigen der Heckfläche werden die rotierenden Seitenbürsten ausgehend vom Ende der Seitenflächen 12 an der Heckfläche 13 entlang und aufeinander zugeführt, was in Fig. 3a dargestellt ist.

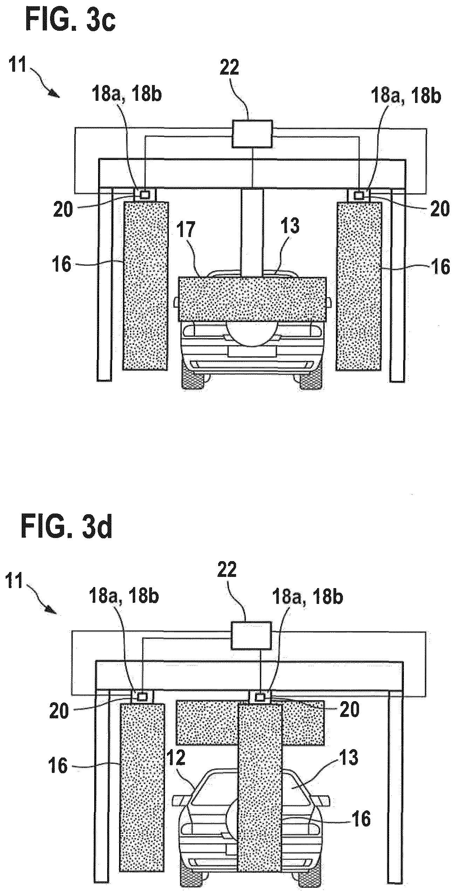

Falls der Neigungswinkel einer oder beider Seitenbürsten 16 beim Reinigen der Heckfläche 13 im Wesentlichen nicht im vorbestimmten Winkelbereich liegt, werden die Bahn bzw. die Bahnen der Seitenbürsten adaptiert. Dies ist in Fig. 3b und 3c dargestellt. Im vorliegenden Beispiel ist nämlich in der Mitte der Heckfläche ein Ersatzrad vorgesehen. Sobald die in Draufsicht auf die Heckfläche 13 vertikal orientierten Seitenbürsten 16 das Ersatzrad erreichen, werden sie im Wesentlichen parallel zur Heckfläche 13 aus der Vertikalen ausgelenkt, wie in Fig. 3b gezeigt ist. Dies wird von den jeweiligen Einrichtungen 20 zum Überwachen der Neigungswinkel der Seitenbürsten 16 im vorliegenden Beispiel innerhalb von ca. 100 ms detektiert und an die Speicher- und Steuereinrichtung 22 gemeldet. Daraufhin veranlasst die Speicher- und Steuereinrichtung 22, dass die Bürstenverfahrvorrichtung 18a die Seitenbürsten 16 vom Fahrzeug seitlich separiert, sodass kein Kontakt zwischen den Seitenbürsten und dem Fahrzeug gegeben ist, wie in Fig. 3c dargestellt. Auf diese Weise wird die Bahn der Seitenbürsten adaptiert und es wird vermieden, dass die Seitenbürsten das Ersatzrad des Fahrzeugs beschädigen. Über die Speicher- und Steuereinrichtung 22 wird nun die Dachbürste 17 aktiviert, die entlang der Heckfläche 13 in einem derartigen Abstand dazu geführt wird, dass sie das Ersatzrad reinigt, was in Fig. 3c dargestellt ist. Der Zeitraum vom Beginn der Detektion der unerwünschten Auslenkung der Seitenbürste(n) bis zum Einleiten des Adaptierens beträgt im vorliegenden Beispiel ca. 0,3 s. Die Überwachung anhand des Neigungswinkels der Behandlungsbürste zeigt somit eine relativ geringe Totzeit, d.h. einen kurzen Zeitraum, in dem eine bereits vorhandene Störung oder Abweichung vom erwünschten Behandlungsvorgang nicht erkannt wird.

In einer Abwandlung des Schritts der Fig. 3c kann eine der Seitenbürsten, z.B. die rechte Seitenbürste 16, nicht vom Fahrzeug separiert werden, sondern statt der Dachbürste 17 entlang der Heckfläche 13 in einem derartigen Abstand dazu geführt werden, dass sie das Ersatzrad reinigt. Dies ist in Fig. 3d dargestellt. Dabei wird die Seitenbürste parallel und senkrecht zur Heckfläche im Wesentlichen vertikal ausgerichtet. Alternativ kann die Seitenbürste in einem Winkel in Richtung zu der Heckfläche 13 geneigt ausgerichtet werden. Auf diese Weise wird für die Seitenbürste 16 ein Umfahren einer die Abweichung des überwachten Winkels verursachenden Kontur der Heckfläche, d.h. vorliegend des Ersatzrades, derart realisiert, dass die Seitenbürste 16 weiterhin in Kontakt zum Fahrzeug, hier zum Ersatzrad, steht und die umfahrene Kontur des Fahrzeugs reinigt. Die in Bezug zur Fig. 3c beschriebene Reinigung mit der Dachbürste 17 kann zusätzlich ausgeführt werden.

Ferner wird in Abwandlungen des vorstehenden Beispiels der Fig. 3a bis 3d, wenn das Ersatzrad rechts oder links von der Mitte der Heckfläche 13 vorgesehen ist, nur diejenige Seitenbürste 16 aus dem vorbestimmten Winkelbereich ausgelenkt, die das Ersatzrad zuerst erreicht. Dann wird die Bahn der zuerst ausgelenkten Seitenbürste adaptiert durch Umfahren des Ersatzrades mit dieser Seitenbürste und Reinigen des Ersatzrades wie oben beschrieben. Alternativ kann die Bahn adaptiert werden durch Separieren der zuerst ausgelenkten Seitenbürste oder beider Seitenbürsten vom Fahrzeug und Reinigen des Ersatzrades mit der Dachbürste 17 wie oben beschrieben. In einer zusätzlichen Abwandlung wird die andere Seitenbürste 16 an der Heckfläche 13 weitergeführt, bis auch diese am Ersatzrad aus dem vorbestimmten Winkelbereich parallel zur Heckfläche 13 ausgelenkt wird. Auf diese Weise kann mittels der Bürstenverfahrvorrichtungen 18a der beiden Seitenbürsten zudem die genaue Position und Abmessung des Ersatzrades ermittelt werden. Anschließend kann das Ersatzrad mit einer der beiden Seitenbürsten 16 durch Umfahren desselben und/oder mit der Dachbürste 17 wie oben beschrieben (noch einmal) gereinigt werden.

Im vorgenannten Beispiel kann statt dem Ersatzrad an der Heckfläche eine geöffnete oder eine während des Reinigungsvorgangs aufgehende Heckklappe oder ein aufgeklappter Fahrradhalter die Abweichung des überwachten Winkels der Seitenbürste vom vorbestimmten Winkelbereich hervorrufen. Das beschriebene Verfahren wird dann analog ausgeführt und die Bahn der Seitenbürste adaptiert, um Beschädigungen des Fahrzeugs zu vermeiden.

Die in den Fig. 3a, 3b und 3d gezeigten Schritte können auch mit der Vorrichtung 10 ohne Dachbürste durchgeführt werden. Gemäß weiteren Beispielen können mit den Seitenbürsten zunächst die Seitenflächen und dann eine daran angrenzende Heckfläche gereinigt werden. Hierfür können die mit Bezug auf die Vorrichtungen 10 und 11 erläuterten Beispiele kombiniert werden. Alternativ können zunächst die Heckfläche und dann daran angrenzende Seitenflächen gereinigt werden.

In weiteren Abwandlungen der vorstehenden Beispiele können die Vorrichtungen 10 und 11 und die zugehörigen Verfahren auf analoge Weise mindestens eine Heckbürste zum Reinigen der Heckfläche 13 aufweisen bzw. einsetzen. Die Heckbürste kann ausschließlich die Heckfläche 13 reinigen. Die Heckbürste kann z.B. vertikal ausgerichtet an einer weiteren Traverse des Waschportals getrennt von den Seitenbürsten vorgesehen sein, und mit einem an der zugehörigen Traverse angeordneten Schlitten parallel zur Heckfläche 13 daran entlanggeführt werden. Mindestens eine Heckbürste zum Reinigen der Heckfläche 13 und/oder mindestens eine Frontbürste zum Reinigen der Frontfläche des Fahrzeugs können analog auch bei einer Waschstraße vorgesehen sein.

Es versteht sich, dass die Aufhängung der Bürstenverfahrvorrichtung 18a der jeweiligen Reinigungsbürste(n) für die oben beschriebenen Fälle einer Reinigung nur der Seitenflächen und einer Reinigung nur der Heckfläche abgewandelt ausgestaltet sein kann. Werden nur eine oder zwei Seitenflächen gereinigt, können für die Bürstenaufhängung jeweils eine Schwenkachse und ein Stellantrieb genügen, mit denen die zentrale Drehachse der Bürste im Wesentlichen parallel zur Heckfläche des Fahrzeugs verschwenkt werden kann. Im Falle einer Heckbürste, die nur die Heckfläche reinigt, kann eine Schwenkachse und ein Stellantrieb vorgesehen sein, durch die die zentrale Drehachse der Bürste im Wesentlichen parallel zur Seitenfläche des Fahrzeugs verschwenkt werden kann. Ferner können in alternativen Ausführungsformen der Vorrichtung und des Verfahrens andere Aufhängungen der Reinigungsbürsten vorgesehen sein. Zum Beispiel kann mindestens eine der Reinigungsbürsten frei schwingend am oberen Ende der Bürstenachse aufgehängt sein, insbesondere an einem Auslegerarm am oberen Ende der Bürstenachse oder an zwei Auslegerarmen am oberen und unteren Ende der Bürstenachse. In diesem Fall kann die Einstellung des Neigungswinkels der Bürste über den oder die Auslegerarme unter Abstützung der Bürste auf der jeweils zu reinigenden Außenfläche des Fahrzeugs erfolgen.

In einer weiteren Ausführungsform des Verfahrens kann bei einer anfänglichen Konturerfassung, wie oben erwähnt, die Höhe des Fahrzeugs ermittelt werden und daraus ein oberer und unterer Grenzwert des vorbestimmten Winkelbereichs parallel und/oder senkrecht zu den Außenflächen abgeleitet werden.

Wie aus den vorstehenden Beispielen ersichtlich ist, wird die Bahn der Behandlungsbürste adaptiert, wenn im Schritt c) des Verfahrens eine Abweichung des überwachten Winkels der Behandlungsbürste von dem vorbestimmten Winkelbereich ermittelt wird. Somit erlauben Ausführungsformen der Vorrichtung und des Verfahrens, dass die Bahn der Behandlungsbürste(n) entlang der Außenflächen an die gesamte äußere Kontur des Fahrzeugs, d.h. auch an ungewöhnliche oder unerwartete Konturen der Außenflächen, automatisch angepasst ist/wird. Dies führt zu einer besonders gründlichen Reinigung des Fahrzeugs und zu einer hohen Betriebssicherheit. Auf diese Weise können auch ungewöhnliche und unerwünschte Situationen während der Fahrzeugbehandlung z.B. mittels Sensorwerten von Winkel- oder Neigungssensoren und optional durch eine beliebige Kombination mit Sensorwerten von Lichtschranken, der Leistungsmessung und von Wegsensoren, automatisch erkannt werden und Anpassungen des Programmablaufs können automatisch eingeleitet werden. Die an die jeweilige Situation adaptiv angepassten Abläufe können durchgeführt werden, bis die Vorrichtung zum Behandeln des Fahrzeugs wieder in den normalen Regelbetrieb zurückgehen kann oder nach Überschreitung einer gewissen Anzahl von Adaptions-Versuchen oder einer Maximalzeit in einen Störungszustand fällt.

Beispielweise wenn sich beim Behandeln einer Außenfläche die Behandlungsbürste an einem Anbauteil des Fahrzeugs verfängt, wird die Bürste unvorhergesehen aus dem vorbestimmten Winkelbereich ausgelenkt. Anstatt einfach weiter zu behandeln oder direkt in einen Fehlermodus zu gehen, setzt die Vorrichtung zum Behandeln des Fahrzeugs die Bürste gegen den erwünschten Neigungswinkel im vorbestimmten Winkelbereich zurück und versucht, den Bereich des Anbauteils nochmals zu behandeln. Alternativ wird der Bereich des Anbauteils umfahren. So kann z.B. ein an der Heckfläche eines Fahrzeugs unvorhergesehen vorhandenes Ersatzrad und dessen Umgebung trotzdem behandelt werden. Die durch das Verfahren generierten Informationen über das Anbauteil, z.B. dessen Position und/oder Größe, können in der Anlage gespeichert werden und können auch in nachfolgenden Prozessen wie z.B. Chemieauftrag, Trocknung etc. verwendet werden. Es können abweichend vom normalen Behandlungsvorgang weitere Aggregate aktiviert werden, um Zusatzinformationen zu sammeln, z.B. eine Lichtschranke eines Dachtrockners für eine Längenmessung.

Ferner kann bei und/oder vor dem Ausführen des Adaptierens der Bahn der Behandlungsbürste die Durchführbarkeit desselben geprüft werden. Wenn sich z.B. beim Behandeln einer Außenfläche die Behandlungsbürste mit ihren Bürstenmaterial an einem Anbauteil (z.B. Anhängerkupplung) des Fahrzeugs verfängt, und die Bürste unvorhergesehen aus dem vorbestimmten Winkelbereich ausgelenkt wird, kann die Bürste beispielsweise in die entgegengesetzte Richtung in Rotation versetzt werden, um deren Bahn zu adaptieren. Dadurch kann ermöglicht werden, dass sich das Bürstenmaterial wieder von dem Anbauteil löst. Zusätzlich kann, bevor die Rotationsrichtung der Bürste verändert wird, die Durchführbarkeit dieser Maßnahme des Adaptierens geprüft werden.

In einem Beispiel für die Prüfung der Durchführbarkeit eines Schritts des Adaptierens kann anhand von Sensordaten, z.B. von Lichtschranken, geprüft werden, ob für den weiteren Betrieb der Bürste beim Adaptieren ausreichend Platz vorhanden ist. Ergibt diese Prüfung, dass nicht genügend Platz für das Adaptieren der Bürste vorhanden ist, wird der Behandlungsvorgang unterbrochen oder beendet. In einem alternativen Beispiel für die Prüfung der Durchführbarkeit kann bei und/oder vor dem Adaptieren der Bahn der Bürste durch Messung der Leistung des Bürstenantriebs geprüft werden, ob der Bürstenantrieb an seiner Leistungsgrenze arbeitet. Wenn dies der Fall ist, wird der Behandlungsvorgang unterbrochen oder beendet. Zusätzlich kann für die Messung der Leistung des Bürstenantriebs die Empfindlichkeit der Messung erhöht werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 10, 11: Vorrichtung zum Behandeln eines Fahrzeugs mit mindestens einer Außenfläche
- 12: Seitenfläche
- 13: Heckfläche
- 16: Seitenbürste
- 17: Dachbürste
- 18a: Bürstenverfahrvorrichtung
- 18b: Einrichtung zum Einstellen eines Winkels der Behandlungsbürste relativ zur Vertikalen
- 20: Einrichtung zum Überwachen des Winkels der Reinigungsbürste
- 22: Steuerung

## Patentansprüche

1. Verfahren zum Behandeln, insbesondere Reinigen, eines Fahrzeugs mit mindestens einer Außenfläche (12, 13), umfassend
a) Einstellen eines Winkels einer Behandlungsbürste (16; 17) relativ zur Vertikalen in mindestens einem vorbestimmten Winkelbereich parallel und/oder senkrecht zur Außenfläche (12,13), wobei der Winkel der Behandlungsbürste (16, 17) unter Bereitstellung einer Schwenkbarkeit der Behandlungsbürste (16, 17) eingestellt wird;
b) Entlangführen der Behandlungsbürste (16; 17) an der mindestens einen Außenfläche (12,13) auf einer vorgegebenen Bahn während eines Behandlungsvorgangs, wobei die vorgegebene Bahn durch ein vor Beginn des Behandlungsvorganges festgelegtes Behandlungsprogramm vorgegeben ist;
c) Überwachen des Winkels der Behandlungsbürste (16; 17) zur Vertikalen parallel und/oder senkrecht zur Außenfläche während Schritt b); und
d) Adaptieren der vorgegebenen Bahn der Behandlungsbürste, wenn im Schritt c) eine Abweichung des überwachten Winkels der Behandlungsbürste von dem mindestens einen vorbestimmten Winkelbereich ermittelt wird.

2. Verfahren nach Anspruch 1, wobei das Adaptieren der vorgegebenen Bahn mindestens einen Schritt umfasst, ausgewählt aus
i) Wiederholen mindestens einen der Schritte a) bis d);
ii) Wiederholen mindestens einen der Schritte a) bis d) mit einem modifizierten Abstand der Behandlungsbürste zur Außenfläche;
iii) Wiederholen mindestens einen der Schritte a) bis d) mit einem modifizierten Winkel der Behandlungsbürste zur Vertikalen parallel und/ oder senkrecht zur Außenfläche;
iv) Wiederholen mindestens Schritt b) von der Schritten a) bis d), wobei in Schritt b) beim Entlangführen ein Richtungswechsel vorgenommen wird;
v) Umfahren einer die Abweichung des überwachten Winkels verursachenden Kontur der Außenfläche;
vi) Vergrößern des Abstands der Behandlungsbürste zur Außenfläche;
vii) Separieren der Behandlungsbürste vom Fahrzeug;
viii) Beenden einer Rotation der Behandlungsbürste;
ix) Behandeln einer die Abweichung des überwachten Winkels verursachenden Kontur der Außenfläche mit mindestens einer anderen Behandlungsbürste;
x) Verändern der Rotationsrichtung der Behandlungsbürste;
xi) Variieren der Empfindlichkeit der Leistungsmessung; und
xii) Prüfen der Durchführbarkeit mindestens eines der Schritte i) bis xi) und Unterbrechen oder Beenden des Behandlungsvorgangs, wenn festgestellt wird, dass der mindestens eine Schritt i) bis xi) nicht durchführbar ist.

3. Verfahren nach Anspruch 1 oder 2,
wobei die Behandlungsbürste auf einer oder mehrerer adaptierten Bahnen solange an der mindestens einen Außenfläche entlanggeführt wird, bis mindestens eine der folgenden Bedingungen erfüllt ist:
- der überwachte Winkel der Behandlungsbürste befindet sich im mindestens einen vorbestimmten Winkelbereich;
- die Bahn der Behandlungsbürste wurde eine vorbestimmte Anzahl von Malen adaptiert; und
- die Behandlungsbürste wurde auf einer oder mehreren adaptierten Bahnen eine vorbestimmte Zeit lang an der Außenfläche entlanggeführt.

4. Verfahren nach einem der vorstehenden Ansprüche 1 bis 3,
wobei die mindestens eine Außenfläche ausgewählt ist aus einer Seitenfläche, einer Heckfläche, einer Fronfläche, einer Dachfläche, einer beliebigen Kombination davon und einer beliebigen Anzahl davon, und der mindestens eine vorbestimmte Winkelbereich von einem oberen Grenzwert und/oder einem unteren Grenzwert begrenzt ist, der/die abhängig von der Art der Außenfläche variiert/variieren; und/oder der obere und untere Grenzwert für den mindesten einen vorbestimmten Winkelbereich parallel und/oder senkrecht zu Außenseiten des Fahrzeugs von einer bei einer anfänglich durchgeführten Konturerfassung des Fahrzeugs ermittelten Höhe des Fahrzeugs abgeleitet wird; und/oder
wobei die mindestens eine Außenfläche ausgewählt ist aus einer Seitenfläche, einer Heckfläche, einer Fronfläche, einer beliebigen Kombination davon und einer beliebigen Anzahl davon, und der mindestens eine vorbestimmte Winkelbereich -45° bis +45° zur Vertikalen beträgt; und/oder
wobei die mindestens eine Außenfläche eine Dachfläche ist und der mindestens eine vorbestimmte Winkelbereich -85° bis +85° beträgt; und/oder
wobei Schritt c) unter Verwendung eines Winkelsensors oder eines Neigungssensors ausgeführt wird.

5. Verfahren nach Anspruch 4,
wobei der Winkelsensor einen Magneten und einen Magnetfeldsensor umfasst; und/oder
wobei im Schritt c) eine Veränderung der Ausrichtung des Magnetfelds eines Magneten ermittelt wird.

6. Verfahren nach einem der Ansprüche 1 bis 5,
wobei die Kontur und/oder Position der Außenfläche ermittelt wird; und/oder
wobei die Behandlungsbürste rotiert und Schritt c) mindestens einen Schritt umfasst ausgewählt aus: Überwachen der Leistungsaufnahme der rotierenden Behandlungsbürste und Überwachen der Rotation der rotierenden Behandlungsbürste.

7. Vorrichtung zum Behandeln, insbesondere Reinigen, eines Fahrzeugs mit mindestens einer Außenfläche (12,13) mit einem Verfahren nach einem der Ansprüche 1 bis 6, umfassend
mindestens eine Behandlungsbürste (16; 17), die an der mindestens einen Außenfläche auf einer vorgegebenen Bahn entlangführbar ist, wobei die vorgegebene Bahn durch ein vor Beginn des Behandlungsvorganges festgelegtes Behandlungsprogramm vorgegeben ist;
eine Bürstenverfahrvorrichtung (18a) zum Entlangführen der Behandlungsbürste an der zu behandelnden Außenfläche auf der vorgegebenen Bahn;
eine Einrichtung (18b) zum Einstellen eines Winkels der Behandlungsbürste (16; 17) relativ zur Vertikalen in mindestens einem vorbestimmten Winkelbereich parallel und/oder senkrecht zur Außenfläche, wobei der Winkel der Behandlungsbürste (16, 17) unter Bereitstellung einer Schwenkbarkeit der Behandlungsbürste (16, 17) eingestellt wird;
eine Einrichtung (20) zum Überwachen des Winkels der Behandlungsbürste zur Vertikalen parallel und/oder senkrecht zur Außenfläche während des Behandlungsvorgangs; und
eine Einrichtung (18a, 18b, 20) zum Adaptieren der vorgegebenen Bahn der Behandlungsbürste, wenn der überwachte Winkel der Behandlungsbürste von dem mindestens einen vorbestimmten Winkelbereich abweicht.

8. Vorrichtung nach Anspruch 7,
wobei die Behandlungsbürste rotierbar gelagert ist und die Vorrichtung einen Bürstenrotationsantrieb umfasst; und/oder
wobei die Einrichtung zum Adaptieren der vorgegebenen Bahn der Behandlungsbürste eine datenverarbeitende Speicher- und Steuereinheit (22) umfasst, die datenleitend mit mindestens einer Einrichtung ausgewählt aus der Bürstenverfahrvorrichtung, dem Bürstenrotationsantrieb, der Einrichtung zum Einstellen eines Winkels der Behandlungsbürste und der Einrichtung zum Überwachen des Winkels der Behandlungsbürste verbunden ist, die zum Speichern von diesen Einrichtungen empfangener Daten ausgebildet ist und die zum Steuern des Verfahrens nach einem der Ansprüche 1 bis 6 ausgebildet ist.

9. Vorrichtung nach Anspruch 7 oder 8,
wobei mindestens ein Element ausgewählt aus der Behandlungsbürste, der Bürstenverfahrvorrichtung und dem Bürstenrotationsantrieb mittels der Einrichtung zum Adaptieren der vorgegebenen Bahn der Behandlungsbürste regelbar ist;
und/oder
wobei in der Einrichtung zum Adaptieren der vorgegebenen Bahn der Behandlungsbürste ein Programm implementiert ist, das dazu ausgelegt ist, die Vorrichtung nach Anspruch 7 oder 8 dazu zu veranlassen, ein Verfahren nach einem der Ansprüche 1 bis 6 auszuführen.

10. Vorrichtung nach einem der Ansprüche 7 bis 9,
wobei die mindestens eine Außenfläche ausgewählt ist aus einer Seitenfläche, einer Heckfläche, einer Fronfläche, einer Dachfläche, einer beliebigen Kombination davon und einer beliebigen Anzahl davon, und der mindestens eine vorbestimmte Winkelbereich von einem oberen Grenzwert und/oder einem unteren Grenzwert begrenzt ist, der/die abhängig von der Art der Außenfläche variiert/variieren; und/oder der obere und untere Grenzwert für den mindesten einen vorbestimmten Winkelbereich parallel und/oder senkrecht zu Außenseiten des Fahrzeugs von einer bei einer anfänglich durchgeführten Konturerfassung des Fahrzeugs ermittelten Höhe des Fahrzeugs abgeleitet wird; und/oder
wobei die mindestens eine Außenfläche ausgewählt ist aus einer Seitenfläche, einer Heckfläche, einer Fronfläche, einer beliebigen Kombination davon und einer beliebigen Anzahl davon, und der mindestens eine vorbestimmte Winkelbereich -45° bis +45° zur Vertikalen beträgt; und/oder
wobei die mindestens eine Außenfläche eine Dachfläche ist und der mindestens eine vorbestimmte Winkelbereich -85° bis +85° zur Vertikalen beträgt.

11. Vorrichtung nach einem der vorstehenden Ansprüche 7 bis 10,
wobei die Einrichtung zum Überwachen des Winkels der Behandlungsbürste einen Winkelsensor oder einen Neigungssensor aufweist.

12. Vorrichtung nach Anspruch 11,
wobei der Winkelsensor einen Magneten und einen Magnetfeldsensor umfasst; und/oder
wobei der Winkelsensor dazu ausgebildet ist, eine Veränderung der Ausrichtung des Magnetfelds eines Magneten zu ermitteln.

13. Vorrichtung nach einem der Ansprüche 7 bis 12, weiter umfassend mindestens ein Element ausgewählt aus:
einer Einrichtung zum Überwachen der Leistungsaufnahme der rotierenden Behandlungsbürste;
einer Einrichtung zum Überwachen der Rotation der rotierenden Behandlungsbürste; und
einer Einrichtung zum Ermitteln der Kontur und/oder Position der Außenfläche.

14. Verwendung einer Vorrichtung nach einem der Ansprüche 7 bis 13 zum Ausführen eines Verfahrens nach einem der Ansprüche 1 bis 6.

15. Computerprogrammprodukt oder Computerprogramm, umfassend Programmelemente, die eine Ausführungseinheit, insbesondere eine Fahrzeugbehandlungsanlage oder eine Vorrichtung nach einem der Ansprüche 7 bis 13, dazu veranlassen, das Verfahren nach einem der Ansprüche 1 bis 6 auszuführen, wenn die Programmelemente in einen Speicher der Ausführungseinheit oder in einen Speicher eines mit der Ausführungseinheit in datenleitender Verbindung stehenden Servers oder Computers geladen werden.

## Claims

1. Method for treating, in particular cleaning, a vehicle having at least one outer surface (12, 13), comprising
a) Adjustment of an angle of a treatment brush (16; 17) relative to the vertical in at least one predetermined angular range parallel and/or perpendicular to the outer surface (12, 13) , wherein the angle of the treatment brush (16, 17) is adjusted while providing a pivotability of the treatment brush (16, 17) ;
b) Guiding the treatment brush (16; 17) along the at least one outer surface (12, 13) on a predetermined path during a treatment process, the predetermined path being predetermined by a treatment program defined before the start of the treatment process
c) Monitoring the angle of the treatment brush (16; 17) to the vertical parallel and/or perpendicular to the outer surface during step b); and
d) Adapting the predetermined path of the treatment brush if a deviation of the monitored angle of the treatment brush from the at least one predetermined angle range is determined in step c)

2. Method according to claim 1, wherein adapting the predetermined path comprises at least one step selected from
i) Repeating at least one of steps a) through d);
ii) Repeating at least one of steps a) to d) with a modified distance of the treatment brush from the outer surface;
iii) Repeating at least one of steps a) to d) with a modified angle of the treatment brush to the vertical parallel and/or perpendicular to the outer surface
iv) Repeating at least step b) of steps a) to d), wherein in step b) a change of direction is carried out when moving along
v) Moving around a contour of the outer surface causing the deviation of the monitored angle
vi) Increasing the distance between the treatment brush and the outer surface
vii) Separating the treatment brush from the vehicle;
viii) Stopping a rotation of the treatment brush;
ix) treating a contour of the outer surface causing the deviation of the monitored angle with at least one other treatment brush
x) Changing the direction of rotation of the treatment brush;
xi) Varying the sensitivity of the power measurement; and
xii) Checking the feasibility of at least one of steps i) to xi) and interrupting or terminating the treatment process if it is determined that the at least one of steps i) to xi) is not feasible.

3. Method according to claim 1 or 2
wherein the treatment brush is guided along the at least one outer surface on one or more adapted paths until at least one of the following conditions is met
- the monitored angle of the treatment brush is within the at least one predetermined angle range
- the path of the treatment brush has been adapted a predetermined number of times; and
- the treatment brush has been guided along the outer surface on one or more adapted paths for a predetermined time.

4. Method according to any one of the preceding claims 1 to 3,
wherein the at least one exterior surface is selected from a side surface, a rear surface, a front surface, a roof surface, any combination thereof and any number thereof, and the at least one predetermined angular range is bounded by an upper limit value and/or a lower limit value which varies depending on the type of exterior surface; and/or
the upper and lower limit values for the at least one predetermined angular range parallel and/or perpendicular to exterior surfaces of the vehicle are derived from a height of the vehicle determined during an initial contour detection of the vehicle; and/or
wherein the at least one exterior surface is selected from a side surface, a rear surface, a front surface, any combination thereof, and any number thereof, and the at least one predetermined angular range is -45° to +45° from vertical; and/or
wherein the at least one exterior surface is a roof surface and the at least one predetermined angular range is -85° to +85°; and/or
wherein step c) is performed using an angle sensor or a tilt sensor

5. Method of claim 4,
wherein the angle sensor comprises a magnet and a magnetic field sensor; and/or
wherein in step c) a change in the orientation of the magnetic field of a magnet is determined.

6. Method according to any one of claims 1 to 5,
wherein the contour and/or position of the outer surface is determined; and/or
wherein the treatment brush rotates and step c) comprises at least one step selected from: monitoring the power consumption of the rotating treatment brush and monitoring the rotation of the rotating treatment brush.

7. Apparatus for treating, in particular cleaning, a vehicle having at least one outer surface (12, 13) with a method according to one of claims 1 to 6, comprising at least one treatment brush (16; 17) which can be guided along a predetermined path on the at least one outer surface, the predetermined path being predetermined by a treatment program defined before the start of the treatment process;
a brush traversing device (18a) for guiding the treatment brush along the outer surface to be treated on the predetermined path;
a device (18b) for setting an angle of the treatment brush (16; 17) relative to the vertical in at least one predetermined angular range parallel and/or perpendicular to the outer surface, wherein the angle of the treatment brush (16, 17) is set while providing a pivotability of the treatment brush (16, 17);
means (20) for monitoring the angle of the treatment brush to the vertical parallel and/or perpendicular to the outer surface during the treatment process; and means (18a, 18b, 20) for adapting the predetermined path of the treatment brush when the monitored angle of the treatment brush deviates from the at least one predetermined angular range.

8. Apparatus according to claim 7,
wherein the treatment brush is rotatably mounted and the device comprises a brush rotation drive; and/or
wherein the means for adapting the predetermined path of the treatment brush comprises a data-processing storage and control unit (22) which is connected in a data-conducting manner to at least one device selected from the brush traversing device, the brush rotation drive, the device for setting an angle of the treatment brush and the means for monitoring the angle of the treatment brush, which is designed to store data received from these devices and which is designed to control the method according to one of claims 1 to 6.

9. Apparatus according to claim 7 or 8,
wherein at least one element selected from the treatment brush, the brush traversing device and the brush rotation drive is controllable by means of the device for adapting the predetermined path of the treatment brush; and/or
wherein a program is implemented in the device for adapting the predetermined path of the treatment brush, which program is designed to cause the device according to claim 7 or 8 to carry out a method according to one of claims 1 to 6.

10. Apparatus according to any one of claims 7 to 9,
wherein the at least one exterior surface is selected from a side surface, a rear surface, a front surface, a roof surface, any combination thereof and any number thereof, and the at least one predetermined angular range is bounded by an upper limit value and/or a lower limit value which varies depending on the type of exterior surface; and/or
the upper and lower limit values for the at least one predetermined angular range parallel and/or perpendicular to exterior surfaces of the vehicle are derived from a height of the vehicle determined during an initial contour detection of the vehicle; and/or
wherein the at least one exterior surface is selected from a side surface, a rear surface, a front surface, any combination thereof, and any number thereof, and the at least one predetermined angular range is -45° to +45° to the vertical; and/or
wherein the at least one exterior surface is a roof surface and the at least one predetermined angular range is -85° to +85° to the vertical.

11. Apparatus according to any one of the preceding claims 7 to 10,
wherein the device for monitoring the angle of the treatment brush comprises an angle sensor or a tilt sensor

12. Apparatus of claim 11,
wherein the angle sensor comprises a magnet and a magnetic field sensor; and/or
wherein the angle sensor is adapted to detect a change in the orientation of the magnetic field of a magnet.

13. Apparatus according to any one of claims 7 to 12, further comprising at least one element selected from:
a device for monitoring the power consumption of the rotating treatment brush;
a device for monitoring the rotation of the rotating treatment brush; and
a device for determining the contour and/or position of the outer surface.

14. Use of an apparatus according to any one of claims 7 to 13 for carrying out a method according to any one of claims 1 to 6.

15. Computer program product or computer program comprising program elements which cause an execution unit, in particular a vehicle treatment system or an apparatus according to any one of claims 7 to 13, to execute the method according to any one of claims 1 to 6 when the program elements are loaded into a memory of the execution unit or into a memory of a server or computer in data communication with the execution unit.

## Revendications

1. Procédé de traitement, en particulier de nettoyage, d'un véhicule ayant au moins une surface extérieure (12, 13), comprenant
a) Réglage d'un angle d'une brosse de traitement (16 ; 17) par rapport à la verticale dans au moins une plage angulaire prédéterminée parallèle et/ou perpendiculaire à la surface extérieure (12, 13) , l'angle de la brosse de traitement (16, 17) étant réglé en fournissant une possibilité de pivotement de la brosse de traitement (16, 17) ;
b) le guidage de la brosse de traitement (16 ; 17) le long de la au moins une surface extérieure (12, 13) sur une trajectoire prédéterminée pendant une opération de traitement, la trajectoire prédéterminée étant donnée par un programme de traitement défini avant le début de l'opération de traitement
c) surveiller l'angle de la brosse de traitement (16 ; 17) par rapport à la verticale parallèlement et/ou perpendiculairement à la surface extérieure pendant l'étape b) ; et
d) adapter la trajectoire prédéterminée de la brosse de traitement si, à l'étape c), un écart de l'angle surveillé de la brosse de traitement par rapport à la au moins une plage angulaire prédéterminée est déterminé

2. Procédé selon la revendication 1, dans lequel l'adaptation de la trajectoire prédéterminée comprend au moins une étape choisie parmi
i) répéter au moins une des étapes a) à d) ;
ii) répéter au moins l'une des étapes a) à d) avec une distance modifiée de la brosse de traitement par rapport à la surface extérieure ;
iii) répéter au moins l'une des étapes a) à d) avec un angle modifié de la brosse de traitement par rapport à la verticale, parallèlement et/ou perpendiculairement à la surface extérieure
iv) Répéter au moins l'étape b) des étapes a) à d), un changement de direction étant effectué à l'étape b) lors du guidage le long de la brosse
v) contourner un contour de la surface extérieure qui provoque la déviation de l'angle surveillé
vi) augmentation de la distance entre la brosse de traitement et la surface extérieure
vii) Séparation de la brosse de traitement du véhicule ;
viii) arrêter la rotation de la brosse de traitement ;
ix) traitement d'un contour de la surface extérieure provoquant la déviation de l'angle surveillé avec au moins une autre brosse de traitement
x) modifier le sens de rotation de la brosse de traitement ;
xi) faire varier la sensibilité de la mesure de puissance ; et
xii) vérifier la faisabilité d'au moins une des étapes i) à xi) et interrompre ou arrêter l'opération de traitement s'il est déterminé que ladite au moins une étape i) à xi) n'est pas réalisable.

3. Procédé selon la revendication 1 ou 2
dans lequel la brosse de traitement est guidée le long de ladite au moins une surface extérieure sur une ou plusieurs trajectoires adaptées jusqu'à ce qu'au moins une des conditions suivantes soit remplie
- l'angle surveillé de la brosse de traitement se trouve dans au moins une plage angulaire prédéterminée
- la trajectoire de la brosse de traitement a été adaptée un nombre prédéterminé de fois ; et
- la brosse de traitement a été déplacée le long de la surface extérieure sur une ou plusieurs trajectoires adaptées pendant une durée prédéterminée.

4. Procédé selon l'une quelconque des revendications 1 à 3 ci-dessus,
dans laquelle ladite au moins une surface extérieure est choisie parmi une surface latérale, une surface arrière, une surface avant, une surface de toit, une combinaison quelconque de celles-ci et un nombre quelconque de celles-ci, et ladite au moins une plage angulaire prédéterminée est délimitée par une valeur limite supérieure et/ou une valeur limite inférieure qui varie en fonction du type de surface extérieure ; et/ou les valeurs limites supérieure et inférieure pour la au moins une plage angulaire prédéterminée parallèle et/ou perpendiculaire aux côtés extérieurs du véhicule sont dérivées d'une hauteur du véhicule déterminée lors d'une détection initiale du contour du véhicule ; et/ou
dans lequel ladite au moins une surface extérieure est choisie parmi une surface latérale, une surface arrière, une surface avant, une combinaison quelconque de celles-ci et un nombre quelconque de celles-ci, et ladite au moins une plage angulaire prédéterminée est de -45° à +45° par rapport à la verticale ; et/ou
ladite au moins une surface extérieure étant une surface de toit et ladite au moins une plage angulaire prédéterminée étant de -85° à +85° ; et/ou
dans lequel l'étape c) est exécutée en utilisant un capteur d'angle ou un capteur d'inclinaison

5. Procédé selon la revendication 4,
dans lequel le capteur angulaire comprend un aimant et un capteur de champ magnétique ; et/ou
une modification de l'orientation du champ magnétique d'un aimant étant déterminée à l'étape c).

6. Procédé selon l'une quelconque des revendications 1 à 5,
dans lequel le contour et/ou la position de la surface extérieure sont déterminés ; et/ou
dans lequel la brosse de traitement est en rotation et l'étape c) comprend au moins une étape choisie parmi : surveiller la consommation d'énergie de la brosse de traitement rotative et surveiller la rotation de la brosse de traitement rotative.

7. Dispositif de traitement, notamment de nettoyage, d'un véhicule comportant au moins une surface extérieure (12, 13) par un procédé selon l'une des revendications 1 à 6, comprenant
au moins une brosse de traitement (16 ; 17) qui peut être guidée le long de la au moins une surface extérieure sur une trajectoire prédéfinie, la trajectoire prédéfinie étant prédéfinie par un programme de traitement défini avant le début du processus de traitement ;
un dispositif de déplacement de brosse (18a) pour guider la brosse de traitement le long de la surface extérieure à traiter sur la trajectoire prédéterminée ;
un dispositif (18b) pour régler un angle de la brosse de traitement (16 ; 17) par rapport à la verticale dans au moins une plage angulaire prédéterminée parallèle et/ou perpendiculaire à la surface extérieure, l'angle de la brosse de traitement (16, 17) étant réglé en fournissant une possibilité de pivotement de la brosse de traitement (16, 17) ;
un dispositif (20) pour surveiller l'angle de la brosse de traitement par rapport à la verticale parallèle et/ou perpendiculaire à la surface extérieure pendant l'opération de traitement ; et
un dispositif (18a, 18b, 20) pour adapter la trajectoire prédéterminée de la brosse de traitement lorsque l'angle surveillé de la brosse de traitement s'écarte de la au moins une plage angulaire prédéterminée.

8. Dispositif selon la revendication 7,
la brosse de traitement étant logée de manière rotative et le dispositif comprenant un entraînement de rotation de la brosse ; et/ou
dans lequel le dispositif d'adaptation de la trajectoire prédéterminée de la brosse de traitement comprend une unité de mémoire et de commande (22) traitant des données, qui est reliée par conduction de données à au moins un dispositif choisi parmi le dispositif de déplacement de la brosse, l'entra nement en rotation de la brosse, le dispositif de réglage d'un angle de la brosse de traitement et le dispositif de surveillance de l'angle de la brosse de traitement, qui est conçu pour mémoriser des données reçues de ces dispositifs et qui est conçu pour commander le procédé selon l'une des revendications 1 à 6.

9. Dispositif selon la revendication 7 ou 8,
dans lequel au moins un élément choisi parmi la brosse de traitement, le dispositif de déplacement de la brosse et l'entraînement en rotation de la brosse peut être réglé au moyen du dispositif d'adaptation de la trajectoire prédéterminée de la brosse de traitement ; et/ou
dans lequel, dans le dispositif d'adaptation de la trajectoire prédéterminée de la brosse de traitement, est mis en œuvre un programme adapté pour amener le dispositif selon la revendication 7 ou 8 à mettre en œuvre un procédé selon l'une quelconque des revendications 1 à 6.

10. Dispositif selon l'une quelconque des revendications 7 à 9,
dans laquelle ladite au moins une surface extérieure est choisie parmi une surface latérale, une surface arrière, une surface avant, une surface de toit, une combinaison quelconque de celles-ci et un nombre quelconque de celles-ci, et ladite au moins une plage angulaire prédéterminée est délimitée par une valeur limite supérieure et/ou une valeur limite inférieure qui varie en fonction du type de surface extérieure ; et/ou les valeurs limites supérieure et inférieure pour la au moins une plage angulaire prédéterminée parallèle et/ou perpendiculaire aux côtés extérieurs du véhicule sont dérivées d'une hauteur du véhicule déterminée lors d'une détection initiale du contour du véhicule ; et/ou
dans lequel ladite au moins une surface extérieure est choisie parmi une surface latérale, une surface arrière, une surface avant, une combinaison quelconque de celles-ci et un nombre quelconque de celles-ci, et ladite au moins une plage angulaire prédéterminée est de -45° à +45° par rapport à la verticale ; et/ou dans laquelle ladite au moins une surface extérieure est une surface de toit et ladite au moins une plage angulaire prédéterminée est de -85° à +85° par rapport à la verticale.

11. Dispositif selon l'une quelconque des revendications 7 à 10 ci-dessus,
dans lequel le dispositif de surveillance de l'angle de la brosse de traitement comprend un capteur d'angle ou un capteur d'inclinaison

12. Dispositif selon la revendication 11,
dans lequel le capteur angulaire comprend un aimant et un capteur de champ magnétique ; et/ou
dans lequel le capteur angulaire est conçu pour déterminer un changement d'orientation du champ magnétique d'un aimant.

13. Dispositif selon l'une des revendications 7 à 12, comprenant en outre au moins un élément choisi parmi :
un dispositif de surveillance de la puissance absorbée par la brosse de traitement rotative ;
un dispositif de surveillance de la rotation de la brosse de traitement rotative ; et
un dispositif pour déterminer le contour et/ou la position de la surface extérieure.

14. Utilisation d'un dispositif selon l'une des revendications 7 à 13 pour la mise en œuvre d'un procédé selon l'une des revendications 1 à 6.

15. Produit programme d'ordinateur ou programme d'ordinateur comprenant des éléments de programme qui amènent une unité d'exécution, en particulier une installation de traitement de véhicule ou un dispositif selon l'une quelconque des revendications 7 à 13, à exécuter le procédé selon l'une quelconque des revendications 1 à 6, lorsque les éléments de programme sont chargés dans une mémoire de l'unité d'exécution ou dans une mémoire d'un serveur ou d'un ordinateur en communication de transmission de données avec l'unité d'exécution.
